# EUROPEAN PATENT SPECIFICATION

(11) **EP 2 262 659 B1**
(45) Date of publication and mention of the grant of the patent: **24.04.2013**
(21) Application number: 09723798.6
(22) Date of filing: 25.02.2009
(51) Int. Cl.: B60K 15/04

(54) **FUEL TANK**
KRAFTSTOFFBEHÄLTER
RÉSERVOIR DE CARBURANT

(30) Priority: 28.03.2008 SE 0800698
(43) Date of publication of application: 22.12.2010
(73) Proprietor: Scania CV AB, 151 87 Södertälje (SE)
(72) Inventor: FAGERHOF, Henrik, S-144 33 Rönninge (SE)
(86) International application number: PCT/SE2009/050205
(87) International publication number: WO 2009/120134

(56) References cited:
- EP-A1- 0 648 637
- WO-A1-89/07536
- DE-A1- 10 131 493
- DE-A1- 10 304 556
- US-A- 4 501 374
- US-A- 4 869 283
- US-A- 5 630 445
- US-A- 5 906 189

## Description

### Technical field

The present invention relates to a fuel tank according to the preamble of claim 1.

### Background

Vehicles are provided with one or more fuel tanks for storage of vehicle fuel. Ordinary vehicle fuels such as ethanol, gasoline, diesel fuel and the like give off fire hazard gases at ambient temperatures which often occur during refuelling of vehicles. There is thus risk of ignition of the fire hazard gases which propagate around the fuel tank filling orifice during filling of the tank, e.g. by static electricity giving rise to a spark which ignites the gas. In unfortunate circumstances, gas outside the fuel tank may be ignited, followed by flames from outside the fuel tank propagating down into the fuel tank, whereupon the gas in the fuel tank also ignites, which may lead to the fuel tank exploding.

A known practice for preventing the explosion risk is to earth the fuel tank's filling pipe and the filling station's fuel delivery nozzle to the vehicle frame and/or the filling station in order to prevent potential differences and spark formation due to static electricity. Ignitable gases will nevertheless be present around the fuel tank's filling aperture and may be ignited by other causes.

Another known practice for preventing the explosion risk is to provide a flame guard made of mesh material a short distance down in the fuel tank's filling pipe, thereby preventing flames from outside the fuel tank propagating down into the fuel tank. However, the amount of ignitable gases which rise up from the filling aperture during refuelling is only diminished to a very small extent, while at the same time the fuel flow into the fuel tank during refuelling is limited in that it is difficult for liquid to make its way through the mesh material in the filling pipe.

DE 101 31 493 A1 discloses a fuel tank in which a liquid seal is arranged. The liquid seal includes a tube or conduit with a first end which is communicatively coupled to a chamber and a second end which is communicatively coupled to a chamber via a conduit.

US 5 906 189, which comprises the features mentioned in the preamble of claim 1, discloses a fuel tank in which a liquid chamber body designed as a container is arranged.

DE 103 04 556 discloses a filler pipe for a motor vehicle fuel tank with a guide insert for a filler pistol. The pipe also has a sprung inner closure flap for the tank.

US 5 630 445 A discloses a fuel tank comprising a liquid seal adapted to separating the gas space in the fuel tank from the surrounding atmosphere.

US 4 869 283 A discloses a device for trapping fuel vapors during the refueling of a fuel tank WO 8907536 discloses a fuel tank with a component consisting of an open pore plastic foam material in whose pores the fuel flows to the tank bottom.

EP 0 648 637 A1 discloses a fuel fill vapor recovery system with differential pressure control valve.

US 4 501374 A discloses a safety tank for hazardous fluids having a check valve provided with a filler pipe inserted through a grommet providing a passage for fluids to the interior of the tank.

### Brief description of the invention

The problem that flames from outside the fuel tank can propagate down into the fuel tank and lead to the gas in the fuel tank igniting and the fuel tank exploding is solved according to the invention by a fuel tank according to the characterising part of claim 1.

A fuel tank according to claim 1 having the characteristics that a liquid seal adapted to separating the gas space in the fuel tank from the surrounding atmosphere is arranged at the lower end of the filling pipe, and that the liquid which separates the gas space in the fuel tank from the surrounding atmosphere is the very fuel with which the fuel tank is intended to be replenished and that splash bulkheads (42) are arranged to keep as much liquid as possible in the liquid seal (6), affords the advantage that flames from outside the fuel tank cannot propagate down into the fuel tank, and hence the ignitable gas in the fuel tank is prevented from igniting and the risk of a fuel tank explosion can be eliminated. Moreover, the amount of ignitable gases which flow out via the fuel tank's filling orifice is limited, and the device is also maintenance-free in that it has no moving parts or wearing parts.

### Brief description of the drawing

The invention is explained in more detail below with reference to the attached drawing, in which:

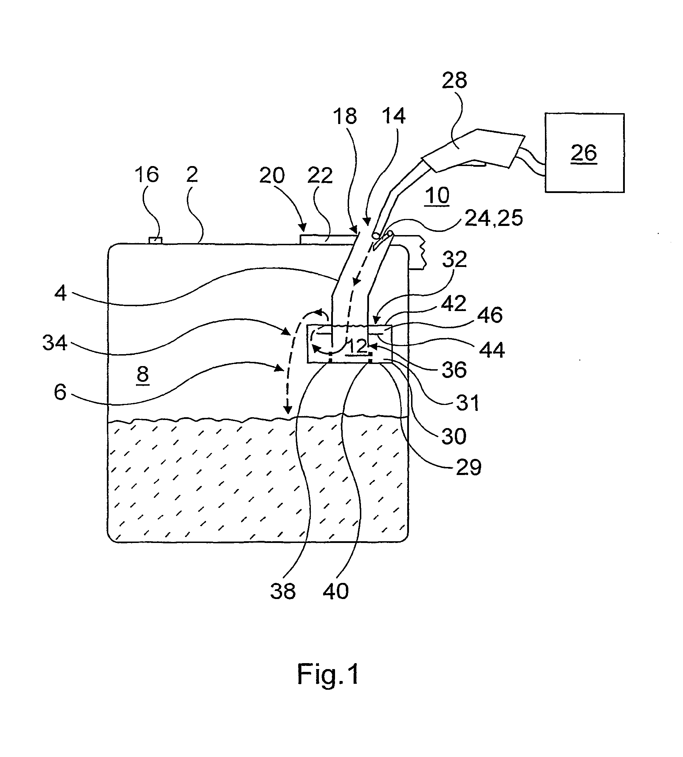

Figure 1 depicts schematically a fuel tank according to an embodiment of the invention.

### Description of preferred embodiment

Figure 1 depicts schematically a fuel tank 2 according to an embodiment of the invention, in which the fuel tank 2 comprises a filling pipe 4 and a liquid seal 6 which is adapted to separating the gas space 8 in the fuel tank 2 from the surrounding atmosphere 10, and the liquid 12 which separates the gas space 8 in the fuel tank 2 from the surrounding atmosphere 10 is the very fuel with which the fuel tank 2 is replenished. The presence of the liquid seal 6 means that the filling orifice 14 of the fuel filling pipe 4 will never be in direct communication with the inside of the fuel tank 2, thereby making it impossible for a flame at the mouth of the filling orifice 14 to make its way into the gas space 8 in the fuel tank 2. A flame might make its way into the filling pipe 4 but will be stopped by the fuel in the liquid seal 6, since it is only the gases from the fuel in the liquid seal 6 which can ignite, whereas the fuel as such will not ignite. Moreover, the gas space in the filling pipe 4 is limited, so no imminent explosion risk arises if the gas in the filling pipe 4 is ignited. The largest amounts of fire hazard gases are formed within the actual fuel tank 2 and accumulate in the gas space 8 of the fuel tank 2, from which the gases may be led away through a traditional venting valve 16 arranged on the fuel tank 2.

The fact only that a small portion of the volume of ignitable gas flows out through the filling aperture 14 during refuelling reduces the risk of this gas being ignited as compared with the previous situation whereby a large amount of ignitable gas flowed out through the filling aperture 14 during refuelling. In order in addition to prevent the risk of ignition of the smaller volumes of ignitable gases present around the mouth of the filling aperture 14 during refuelling, the filling pipe 4 of the fuel tank 2 is preferably earthingly connected via an earth connection 18 to the frame 22 of the vehicle 20, and a further earth connection 24 is provided for connecting the fuel delivery nozzle 28 of the filling station 26 to the frame 22 of the vehicle 20 to prevent potential differences between the filling pipe 4 and the delivery nozzle 28 and spark formation due to static electricity. The earth connection 24 for connecting the delivery nozzle 28 of the filling station 26 to the frame 22 of the vehicle 20 may for example comprise a resilient cover 25 earthed to the filling pipe 4 and closing the mouth of the filling pipe 4, thereby earthing the delivery nozzle 28 to the cover 25 before the delivery nozzle 28 is introduced downwards into the filling pipe 4.

The fact that only small volumes of ignitable gases flow out through the filling aperture 14 during refuelling means that the person refuelling the vehicle is exposed to a smaller amount of these gases than previously, thereby reducing the health risks during refuelling.

The liquid seal 6 comprises a container 30 with at least one aperture 32 in its upper end 34, which container 30 is filled with fuel during refuelling, since the lower end 36 of the filling pipe 4 leads into the container 30 at a position below the aperture 32 in the upper end 34 of the container 30 as viewed in a vertical direction, and the liquid which passes through the container 30 overflows into the fuel tank 2 via the aperture 32. The fact that the lower end 36 of the filling pipe 4 leads into the container 30 below the surface of the liquid with which the container is filled means that these features constitute a liquid seal 6 in which the liquid 12 which separates the gas space 8 in the fuel tank 2 from the surrounding atmosphere 10 is the very fuel with which the fuel tank 2 is replenished.

The filling pipe 4 is preferably fastened to the fuel tank 2 at the point where the filling pipe 4 enters the fuel tank 2. The container 30 is preferably fastened to the filling pipe 4 by, for example, rods 38, 40 (depicted in dotted lines in the diagram). The container 30 is preferably made of the same material as the filling pipe 4 to make it easy for them to be joined together.

The filling pipe 4 is preferably cylindrical and the container 30 is preferably provided with planar bottom 29 and cylindrical sidewall 31. The container 30 is preferably provided with at least one splash bulkhead 42 on its inner side at the aperture 32 in its upper end 34 in order to keep as much liquid as possible in the liquid seal 6. At least one further splash bulkhead 44 may be arranged on the outside of the filling pipe 4 at the lower end 36 of the filling pipe 4, and the two splash bulkheads 42, 44 are preferably so arranged that they overlap one another in the vertical direction, thereby providing a passage 46 for fuel between the splash bulkheads 42,44.

Refuelling involves a fuel delivery nozzle 28 being brought towards the filling orifice 14 and fuel thereafter being poured into the filling pipe 4. At the lower end 36 of the filling pipe 4, the fuel flows down into the container 30 and up along the sides of the container, preferably via a passage 46 between two splash bulkheads 42, 44, and proceeds to an aperture 32 in the upper end 34 of the container 30, via which the fuel flows into the fuel tank 2. If the fuel tank 2 is relatively empty at the time of refuelling, as depicted in the diagram, the fuel runs downwards from the upper end 34 of the container 30 along the outer sides of the container 30, but if the fuel tank 2 is relatively full the fuel proceeds into the fuel tank 2 along only the outside of the filling pipe 4.

To ensure that the liquid seal 6 will not reduce the possible fuel flow through the filling pipe 4 during refuelling, the liquid seal is preferably provided with a large diameter. The further down in the fuel tank 2 the liquid seal 6 is situated, the higher the fuel column may reach in the filling pipe 4, thereby increasing the possible fuel replenishment rate.

## Claims

1. A fuel tank comprising a filling pipe, a liquid seal (6) adapted to separating the gas space (8) in the fuel tank (2) from the surrounding atmosphere (10) is arranged at the lower end (36) of the filling pipe (4), the liquid (12) which separates the gas space (8) in the fuel tank (2) from the surrounding atmosphere (10) being the very fuel with which the fuel tank (2) is intended to be replenished, the liquid seal (6) comprises a container (30) with at least one aperture (32) at its upper end (34), which container (30) is filled with fuel during refuelling, since the lower end (36) of the filling pipe (4) leads into the container (30) at a position below the aperture (32) **characterised in that** the container (30) comprises at least one splash bulkhead (42) on its inner side at the aperture (32) in its upper end (34) in order to keep as much liquid as possible in the liquid seal (6), at least one splash bulkhead (44) on the outside of the filling pipe (4) at the lower end (36) of the filling pipe (4) and **in that** the splash bulkheads (42, 44) on the container (30) and the filling pipe (4) are so arranged that they overlap one another in the vertical direction, thereby providing a passage (46) between the splash bulkheads (42,44).

2. A fuel tank according to claim 1, **characterised in that** the container (30) is fastened to the filling pipe (4).

3. A fuel tank according to any one of the foregoing claims, **characterised in that** the filling pipe (4) is cylindrical and the container (30) is provided with planar bottom (29) and cylindrical sidewall (31).

4. A fuel tank according to any one of the foregoing claims, **characterised in that** the filling pipe (4) of the fuel tank (2) is earthingly connected via an earth connection (18) to the frame (22) of the vehicle (20), and a further earth connection (24) is provided for connecting a fuel delivery nozzle (28) to the frame (22) of the vehicle (20).

5. A fuel tank according to claim 4, **characterised in that** the earth connection (24) for connecting the delivery nozzle (28) to the frame (22) of the vehicle (20) comprises a resilient cover (25) earthed to the filling pipe (4), which cover (25) is adapted to closing the mouth of the filling pipe (4).

6. A fuel tank according to any one of the foregoing claims, **characterised in that** the fuel tank (2) comprises a venting valve (16) for leading fire hazard gases out from the gas space (8) of the fuel tank (2).

## Patentansprüche

1. Kraftstofftank, umfassend ein Befüllungsrohr, eine Flüssigkeitsdichtung (6), die dazu eingerichtet ist, den Gasraum (8) im Kraftstofftank (2) von der umgebenden Atmosphäre (10) zu trennen, und die am unteren Ende (36) des Befüllungsrohres (4) angeordnet ist, wobei die Flüssigkeit (12), die den Gasraum (8) im Kraftstofftank (2) von der umgebenen Atmosphäre (10) trennt, eben jener Kraftstoff ist, mit dem der Kraftstofftank (2) wiederbefüllt werden soll, wobei die Flüssigkeitsdichtung (6) einen Behälter (30) mit zumindest einer Öffnung (32) an dessen oberem Ende (34) umfasst, wobei der Behälter (30) während der Wiederbetankung mit Kraftstoff gefüllt wird, da das untere Ende (36) des Befüllungsrohres (4) in den Behälter (30) zu einer Position unterhalb der Öffnung (32) führt,
**dadurch gekennzeichnet, dass** der Behälter (30) wenigstens eine Spritzertrennwand (42) auf seiner Innenseite an der Öffnung (32) an seinem oberen Ende (34), um so viel Flüssigkeit wie möglich in der Flüssigkeitsdichtung (6) zu behalten, und wenigstens eine Spritzertrennwand (44) an der Außenseite des Befüllungsrohres (4) am unteren Ende (36) des Befüllungsrohres (4) umfasst, und die Spritzertrennwände (42, 44) am Behälter (30) und Befüllungsrohr (4) derart angeordnet sind, dass sie sich in der vertikalen Richtung gegenseitig überlappen, wodurch ein Durchgang (46) zwischen den Spritzertrennwänden (42, 44) bereitgestellt ist.

2. Kraftstofftank nach Anspruch 1,
**dadurch gekennzeichnet, dass** der Behälter (30) am Befüllungsrohr (4) befestigt ist.

3. Kraftstofftank nach einem der vorangehenden Ansprüche,
**dadurch gekennzeichnet, dass** das Befüllungsrohr (4) zylindrisch ist und der Behälter (30) mit einer ebenen Grundfläche (29) und zylindrischen Seitenwänden (31) ausgebildet ist.

4. Kraftstofftank nach einem der vorangehenden Ansprüche,
**dadurch gekennzeichnet, dass** das Befüllungsrohr (4) des Kraftstofftanks (2) in geerdeter Weise mittels einer Erdungsverbindung (18) am Rahmen (22) des Fahrzeugs (20) verbunden ist, und eine weitere Erdungsverbindung (24) bereitgestellt ist, um eine Kraftstoffeinfülldüse (28) mit dem Rahmen (22) des Fahrzeugs (20) zu verbinden.

5. Kraftstofftank nach Anspruch 4,
**dadurch gekennzeichnet, dass** die Erdungsverbindung (24) um die Einfülldüse (28) mit dem Rahmen (22) des Fahrzeugs (20) zu verbinden eine elastische Abdeckung (25) umfasst, die mit dem Befüllungsrohr (4) geerdet ist, wobei die Abdeckung (25) dazu eingerichtet ist, die Öffnung des Befüllungsrohres (4) zu verschließen.

6. Kraftstofftank nach einem der vorangehenden Ansprüche,
**dadurch gekennzeichnet, dass** der Kraftstofftank (2) ein Belüftungsventil (16) umfasst, um feuergefährliche Gase aus dem Gasraum (8) des Kraftstofftanks (2) zu leiten.

## Revendications

1. Réservoir de carburant comprenant un tuyau de remplissage, un joint d'étanchéité liquide (6), conçu pour séparer l'espace contenant les gaz (8) dans le réservoir de carburant (2) de l'atmosphère environnante (10), étant placé à l'extrémité inférieure (36) du tuyau de remplissage (4), le liquide (12) qui sépare l'espace contenant les gaz (8) dans le réservoir de carburant (2) de l'atmosphère environnante (10) étant le même carburant que celui avec lequel le réservoir de carburant (2) doit être rempli, le joint d'étanchéité liquide (6) comprenant un conteneur (30) ayant au moins une ouverture (32) à son extrémité supérieure (34), lequel conteneur (30) est rempli de carburant pendant le ravitaillement en carburant, du fait que l'extrémité inférieure (36) du tuyau de remplissage (4) aboutit dans le conteneur (30) à une position située en dessous de l'ouverture (32), **caractérisé en ce que** le conteneur (30) comprend au moins une cloison brise-jet (42) sur sa face intérieure au niveau de l'ouverture (32) formée à son extrémité supérieure (34) afin de maintenir autant de liquide possible à l'intérieur du joint d'étanchéité liquide (6), au moins une cloison brise-jet (44) sur l'extérieur du tuyau de remplissage (4), à l'extrémité inférieure (36) du tuyau de remplissage (4), et **en ce que** les cloisons brise-jets (42, 44) formées sur le conteneur (30) et le tuyau de remplissage (4) sont disposées de façon à se chevaucher l'une l'autre dans la direction verticale, ce qui forme un passage (46) entre les cloisons brise-jets (42, 44).

2. Réservoir de carburant selon la revendication 1, **caractérisé en ce que** le conteneur (30) est fixé au tuyau de remplissage (4).

3. Réservoir de carburant selon l'une quelconque des revendications précédentes, **caractérisé en ce que** le tuyau de remplissage (4) est cylindrique et le conteneur (30) est pourvu d'un fond plat (29) et d'une paroi latérale cylindrique (31).

4. Réservoir de carburant selon l'une quelconque des revendications précédentes, **caractérisé en ce que** le tuyau de remplissage (4) du réservoir de carburant (2) est mis à la masse via une prise de masse (18) sur le châssis (22) du véhicule (20), et une autre prise de masse (24) est prévue pour la mise à la masse d'une buse de distribution de carburant (28) sur le châssis (22) du véhicule (20).

5. Réservoir de carburant selon la revendication 4, **caractérisé en ce que** la prise de masse (24) pour la mise à la masse de la buse de distribution de carburant (28) sur le châssis (22) du véhicule (20) comprend un capot élastique (25) mis à la masse sur le tuyau de remplissage (4), lequel capot (25) est adapté pour fermer l'embouchure du tuyau de remplissage (4).

6. Réservoir de carburant selon l'une quelconque des revendications précédentes, **caractérisé en ce que** le réservoir de carburant (2) comprend un clapet de mise à l'air (16) pour faire sortir les gaz présentant un risque d'incendie de l'espace contenant les gaz (8) du réservoir de carburant (2).
